# EUROPÄISCHE PATENTANMELDUNG

(11) **EP 0 984 538 A1**
(43) Veröffentlichungstag der Anmeldung: **08.03.2000**
(21) Anmeldenummer: 99114505.3
(22) Anmeldetag: 23.07.1999
(51) Int. Cl.: H02B 5/00

(54) **Sammelschienen-Trennschalter-Anordnung und luftisolierte Schaltanlage**

(30) Priorität: 31.08.1998 DE 19839535
(71) Anmelder: Alstom Energietechnik GmbH, 60528 Frankfurt (DE)
(72) Erfinder: Witzel, Hans-Dieter, Dipl.-Ing., 60320 Frankfurt (DE); Rentz, Friedrich, 68723 Schwetzingen (DE)
(74) Vertreter: Schäfer, Wolfgang, Dipl.-Ing.

(57) **Zusammenfassung**

Die Erfindung betrifft eine Sammelschienen (SS)-Trennschalter-Anordnung bestehend aus zwei SS-Trennschaltern (7; 8), die in einer luftisolierten Schaltanlage (1) zum Umspannen einer Hochspannung, insbesondere einer Spannung zwischen 50 kV und 220 kV, mit einer ersten Schaltfeldanordnung (4), zwei Sammelschienen (5) und einer zweiten Schaltfeldanordnung (6), zwischen einem Leistungsschalter einer der Schaltfeldanordnungen (4; 6) und jeweils einer der Sammelschienen (5) angeordnet sind. Um die von solchen SS-Trennschalter-Anordnungen benötigte Grundfläche zu verringern, schlägt die Erfindung vor, dass die SS-Trennschalter (7; 8) jeweils einen Schwenkhebel (13a; 13b) aufweisen, der an seinem ersten Ende um eine Verschwenkachse (14) in einer Verschwenkebene verschwenkbar gelagert ist und an dessen zweitem Ende ein Schaltkontakt (15a; 15b) ausgebildet ist, der in einer Verbindungsstellung (11; 12), in der über den Schwenkhebel (13a; 13b) eine Verbindung zwischen dem Leistungsschalter und einer der Sammelschienen (5) hergestellt ist, mit einem entsprechenden in der Verschwenkebene liegenden Aufnahmekontakt (5d) der Sammelschiene (5) elektrisch leitend in Verbindung steht, wobei die Verschwenkebenen der beiden SS-Trennschalter parallel zueinander verlaufen und die beiden SS-Trennschalter (7; 8) zu einer SS-Trennschalter-Kombination zusammengefaßt sind.

## Beschreibung

Die vorliegende Erfindung betrifft eine Sammelschienen (SS)-Trennschalter-Anordnung bestehend aus zwei SS-Trennschaltern, die in einer luftisolierten Schaltanlage zum Umspannen einer Hochspannung, insbesondere einer Spannung zwischen 50 kV und 220 kV, mit einer ersten Schaltfeldanordnung, zwei Sammelschienen und einer zweiten Schaltfeldanordnung, zwischen einem Leistungsschalter einer der Schaltfeldanordnungen und jeweils einer der Sammelschienen angeordnet sind.

Die Erfindung betrifft außerdem eine luftisolierte Schaltanlage zum Umspannen einer Hochspannung, insbesondere einer Spannung zwischen 50 kV und 220 kV, mit einer ersten Schaltfeldanordnung, zwei Sammelschienen, einer zweiten Schaltfeldanordnung und mehreren Sammelschienen (SS) - Trennschaltern, die jeweils zwischen einem Leistungsschalter einer der Schaltfeldanordnungen und einer der Sammelschienen angeordnet sind.

Schaltanlagen dienen der Sammlung und Verteilung von elektrischer Energie. In einer Schaltanlage werden bspw. mittels Überland-Hochspannungsleitungen von Kraftwerken zugeführte Hochspannungen in andere Spannungsebenen transformiert, die dann an andere Schaltanlagen, an Ortschaften oder an Industriebetriebe weitergeleitet werden. Eine solche Schaltanlage wird auch als Umspannwerk bezeichnet. Sie weist in der Regel mindestens eine als Leitungsschaltfeld ausgebildete erste Schaltfeldanordnung, mindestens eine Sammelschiene und mindestens eine als Transformatorschaltfeld ausgebildete zweite Schaltfeldanordnung auf. Die Hochspannung wird von den Hochspannungsleitungen über das Leitungsschaltfeld zu den Sammelschienen geleitet. Dort wird die Hochspannung gesammelt bzw. verteilt und an das Transformatorschaltfeld weitergeleitet. Das Transformatorschaltfeld steht mit einem Transformator in Verbindung, der die Hochspannung in eine andere Spannungsebene transformiert. Die transformierte Spannung wird von dem Transformator in Richtung Verbraucher weitergeleitet.

Innerhalb der Schaltanlage wird jede Phase der anliegenden Hochspannung gesondert geführt und geschaltet.

Die Sammelschienen weisen für jede zu schaltende Phase eine eigene Leitung auf. Die Sammelschienen können als ein Einfach-Sammelschienen (ESS)-System oder als ein Doppel-Sammelschienen (DSS)-System ausgebildet sein. Üblicherweise werden in Schaltanlagen nur ESS-Systeme mit einer einzigen Sammelschiene benötigt. Aus Gründen der Versorgungssicherheit werden jedoch verstärkt DSS-Systeme mit einer zweiten, redundanten Sammelschiene eingesetzt. Die vorliegende Erfindung betrifft eine SS-Trennschalter-Anordnung für DSS-Systeme bzw. eine Schaltanlage mit einem DSS-System.

Das Leitungsschaltfeld verbindet die Hochspannungsleitungen mit den Sammelschienen. In dem Leitungsschaltfeld ist für jede Phase ein Leistungsschalter angeordnet, durch den die Verbindung zwischen den Hochspannungsleitungen und den Sammelschienen unterbrochen werden kann. Üblicherweise sind innerhalb des Leitungsschaltfeldes neben den Leistungsschaltern noch weitere Komponenten angeordnet, auf die hier nicht näher eingegangen werden soll.

Zwischen den Leistungsschaltern des Leitungsschaltfeldes und jeweils einer der Sammelschienen ist ein Sammelschienen (SS)-Trennschalter angeordnet. Die SS-Trennschalter ermöglichen eine sichtbare Trennung des Leitungsschaltfeldes von den Sammelschienen, nachdem die Leistungsschalter die Verbindung zwischen den Hochspannungsleitungen und den Sammelschienen unterbrochen haben. Außerdem kann mittels der SS-Trennschalter zwischen den beiden Sammelschienen eines DSS-Systems umgeschaltet und das Leitungsschaltfeld wahlweise an eine der beiden Sammelschienen angeschlossen werden.

Das Transformatorschaltfeld verbindet die Sammelschienen mit dem Transformator. In dem Transformatorschaltfeld ist wie in dem Leitungsschaltfeld ebenfalls für jede Phase ein Leistungsschalter angeordnet. Durch den Leistungsschalter kann die Verbindung zwischen den Sammelschienen und dem Transformator unterbrochen werden. Üblicherweise sind neben den Leistungsschaltern noch weitere Komponenten innerhalb des Transformatorschaltfeldes angeordnet, auf die hier nicht näher eingegangen werden soll.

Zwischen jeweils einer der Sammelschienen und den Leistungsschaltern des Transformatorschaltfeldes ist ein Sammelschienen (SS)-Trennschalter angeordnet. Die SS-Trennschalter ermöglichen eine sichtbare Trennung des Transformatorschaltfeldes von den Sammelschienen, nachdem die Leistungsschalter die Verbindung zwischen den Sammelschienen und dem Transformator unterbrochen haben. Außerdem kann mittels der SS-Trennschalter zwischen den beiden Sammelschienen eines DSS-Systems umgeschaltet und das Transformatorschaltfeld wahlweise an eine der beiden Sammelschienen angeschlossen werden.

Nach dem Stand der Technik sind die SS-Trennschalter als Klapptrennschalter, Drehtrennschalter oder Fahrschalter ausgebildet. Die bekannten SS-Trennschalter sind einzeln und in einem relativ großen Abstand zueinander in der Schaltanlage angeordnet. Deshalb beanspruchen die SS-Trennschalter und damit auch die gesamte Schaltanlage eine große Grundfläche. Dadurch wird insbesondere in Innenstädten, wo die Grundstückspreise sehr hoch sind, sowohl aus ökonomischer als auch aus städteplanerischer Sicht wertvolle Grundstücksfläche vergeudet wird.

Außerdem wird jeder der aus dem Stand der Technik bekannten SS-Trennschalter über eigene Stützen in einem eigenen Fundament gesondert im Untergrund verankert. Das verursacht wegen der erforderlichen umfangreichen Tiefbau- und Fundamentierungsarbeiten zusätzliche Kosten für die Erstellung der bekannten Schaltanlagen.

Bei luftisolierten Schaltanlagen müssen die einzelnen Komponenten aufgrund physikalischer Gesetzmäßigkeiten und entsprechender Normen und Regelungen abhängig von der Größe der zu verarbeitenden Hochspannungen und Strömen in bestimmten Abständen zueinander angeordnet sein. Dadurch wird verhindert, dass es in der Schaltanlage bei den anliegenden hohen Spannungen und Strömen zu Kurzschlüssen zwischen den einzelnen Leitungen oder Komponenten kommt. Wegen der vorgeschriebenen Mindestabstände zwischen den Leitungen und den Komponenten sind die Möglichkeiten, die Komponenten einer Schaltanlage platzsparend anzuordnen und dadurch die Grundfläche der Schaltanlage zu reduzieren, begrenzt.

Die vorliegende Erfindung ist nicht auf als Umspannwerke ausgebildete Schaltanlagen beschränkt. Es gibt auch Schaltanlagen, die lediglich Verteilzwecken dienen, ohne dass darin Transformationsvorgänge vorgenommen werden.

Außerdem ist die Erfindung nicht auf SS-Trennschalter für Schaltanlagen mit als Leitungsschaltfelder oder Transformatorschaltfelder ausgebildeten Schaltfeldanordnungen beschränkt. Eine Schaltfeldanordnung in einer Schaltanlage kann auch als sog. Abgangsfeld (Freileitung oder Kabel), als Meßfeld oder als eine andere Schaltfeldanordnung ausgebildet sein.

Eine Aufgabe der vorliegenden Erfindung besteht deshalb darin, eine SS-Trennschalter-Anordnung für Schaltanlagen mit DSS-Systemen der eingangs genannten Art dahingehend auszugestalten und weiterzubilden, dass der Bedarf an Grundfläche der SS-Trennschalter-Anordnung verringert wird.

Zur Lösung dieser Aufgabe schlägt die Erfindung ausgehend von der SS-Trennschalter-Anordnung der eingangs genannten Art vor, dass die SS-Trennschalter jeweils einen Schwenkhebel aufweisen, der an seinem ersten Ende um eine Verschwenkachse in einer Verschwenkebene verschwenkbar gelagert ist und an dessen zweitem Ende ein Schaltkontakt ausgebildet ist, der in einer Verbindungsstellung, in der über den Schwenkhebel eine Verbindung zwischen dem Leistungsschalter und einer der Sammelschienen hergestellt ist, mit einem entsprechenden in der Verschwenkebene liegenden Aufnahmekontakt einer der Sammelschienen elektrisch leitend in Verbindung steht, wobei die Verschwenkebenen der beiden SS-Trennschalter parallel zueinander verlaufen und die beiden SS-Trennschalter zu einer SS-Trennschalter-Kombination zusammengefaßt sind.

Erfindungsgemäß ist erkannt worden, daß sich derartig ausgebildete SS-Trennschalter in vorteilhafter Weise jeweils zu zweit zu einer besonders kompakten SS-Trennschalter-Kombination zusammenfassen lassen. Dazu werden die beiden parallelen Verschwenkebenen dicht beieinander angeordnet. Die erfindungsgemäße SS-Trennschalter-Anordnung benötigt eine erheblich kleinere Grundfläche als die bekannten SS-Trennschalter-Anordnungen mit den bekannten, getrennt voneinander angeordneten SS-Trennschalter.

Durch das Zusammenfassen von jeweils zwei SS-Trennschaltern zu der SS-Trennschalter-Kombination ist es darüber hinaus möglich, daß die beiden SS-Trennschalter bestimmte Bauteile gemeinsam nutzen, so daß die SS-Trennschalter-Kombination dieses Bauteil nur einmal aufweisen muß. Zudem besteht bei der erfindungsgemäßen SS-Trennschalter-Kombination die Möglichkeit, die beiden SS-Trennschalter über eine gemeinsame Tragkonstruktion in einem gemeinsamen Fundament im Untergrund zu verankern. Dadurch können Materialkosten eingespart, und der Umfang der Tiefbau- und Fundamentierungsarbeiten kann erheblich reduziert werden.

Gemäß einer vorteilhaften Weiterbildung der vorliegenden Erfindung wird vorgeschlagen, dass sich die Verschwenkebenen der SS-Trennschalter in etwa vertikal nach oben erstrecken. Durch eine derartig ausgebildete SS-Trennschalter-Anordnung kann die von den SS-Trennschaltern und damit die von der gesamten Schaltanlage benötigte Grundfläche weiter verringert werden.

Die Schwenkhebel der SS-Trennschalter sind vorteilhafterweise jeweils aus der Verbindungsstellung in eine Nullstellung verschwenkbar, wobei sich die Schwenkhebel in der Nullstellung in etwa vertikal nach oben erstrecken und in der ersten Verbindungsstellung mit der ersten Sammelschiene im Uhrzeigersinn bzw. in der zweiten Verbindungsstellung mit der zweiten Sammelschiene entgegen dem Uhrzeigersinn aus der Nullstellung verschwenkt sind. Die Schwenkhebel sind vorzugsweise in den Verbindungsstellungen jeweils um etwa 45^{°} aus der Nullstellung verschwenkt. Das bedeutet, dass Schwenkhebel in der ersten Verbindungsstellung um etwa 45^{°} im Uhrzeigersinn und in der zweiten Verbindungsstellung um etwa 45^{°} entgegen dem Uhrzeigersinn aus der Nullstellung verschwenkt sind.

Gemäß einer bevorzugten Ausführungsform der vorliegenden Erfindung sind die Schwenkhebel nicht beliebig in den Verschwenkebenen verschwenkbar und unterliegen bestimmten Beschränkungen. So wird vorgeschlagen, dass der erste Schwenkhebel zwischen der ersten Verbindungsstellung und der Nullstellung verschwenkbar ist und dass der zweite Schwenkhebel zwischen der zweiten Verbindungsstellung und der Nullstellung verschwenkbar ist. Jeder der beiden Schwenkhebel ist also einer bestimmten Verbindungsstellung zugeordnet.

Gemäß einer anderen bevorzugten Ausführungsform der erfindungsgemäßen SS-Trennschalter-Anordnung verläuft die Verschwenkachse durch das erste, distale Ende eines Stützisolators, der an seinem zweiten Ende mit den Sammelschienen elektrisch isoliert verbunden ist. Gemäß dieser Ausführungsform sind die SS-Trennschalter gemeinsam an dem ersten Ende des einen Stützisolators angeordnet. Der Stützisolator ist mit seinem zweiten Ende an einer Tragkonstruktion befestigt. Die Tragkonstruktion ist in einem Fundament im Untergrund verankert. Auf diese Weise kann die erfindungsgemäße SS-Trennschalter-Anordnung über eine gemeinsame Tragkonstruktion in einem gemeinsamen Fundament im Untergrund verankert werden. Dadurch können die Tiefbau- und Fundamentierungsarbeiten zum Errichten einer Schaltanlage erheblich reduziert werden.

Gemäß einer besonders bevorzugten Weiterbildung der vorliegenden Erfindung wird vorgeschlagen, dass die Schwenkhebel jeweils in einem Getriebe um die Verschwenkachse verschwenkbar gelagert sind, dass parallel zu dem Stützisolator zwei um ihre Längssachsen drehbar gelagerte Drehisolatoren angeordnet sind, die über ihre ersten Enden jeweils ein Getriebe antreiben und deren zweite Enden jeweils mit einem Antrieb verbunden sind, wobei die Getriebe die Drehbewegung der Drehisolatoren in Schwenkbewegungen der Schwenkhebel umsetzen. Bei dieser Weiterbildung werden die beiden Schwenkhebel getrennt voneinander durch einen eigenen Antrieb, über einen eigenen Drehisolator und ein eigenes Getriebe angetrieben. Sie können unabhängig voneinander in beliebige Verschwenkstellungen in der Verschwenkebene verschwenkt werden.

Alternativ sind die Schwenkhebel in einem Getriebe um die Verschwenkachse verschwenkbar gelagert. Parallel zu dem Stützisolator ist ein um seine Längssachsen drehbar gelagerter Drehisolator angeordnet, der über sein erstes Ende das Getriebe antreibt und dessen zweites Enden mit einem Antrieb verbunden ist, wobei das Getriebe die Drehbewegung des Drehisolators in Schwenkbewegungen der Schwenkhebel umsetzt. Bei dieser Ausführungsform werden beide Schwenkhebel durch einen gemeinsamen Antrieb, über einen gemeinsamen Drehisolator und ein gemeinsames Getriebe angetrieben. Dadurch kann die Antriebsanordnung für einen der beiden SS-Trennschalter eingespart werden. Allerdings muß bspw. durch eine geeignete Auslegung des Getriebes sichergestellt werden, daß die Schwenkhebel trotz lediglich einer Antriebsanordnung derart verschwenkt werden können, dass die volle Funktionsfähigkeit der SS-Trennschalter erhalten bleibt.

Das zweite Ende des Stützisolators ist vorzugsweise tieferliegend angeordnet als das erste, distale Ende des Stützisolators. Der oder die Antriebe sind im Bereich des zweiten Endes des Stützisolators angeordnet. Durch die tiefliegende Position des Antriebs kann dieser zu Reparatur- und Wartungszwecken problemlos erreicht werden.

Zu Wartungs- und Reparaturzwecken ist die SS-Trennschalter-Anordnung gemäß einer anderen bevorzugten Ausführungsform außerdem vertikal nach unten verschiebbar angeordnet. Dazu ist die SS-Trennschalter-Anordnung bspw. auf einer vertikal verlaufenden Schiene verschiebbar gelagert. Die vertikale Bewegung der SS-Trennschalter-Anordnung kann bspw. mittels eines Spindelantriebs erfolgen. Durch die vertikale Verschiebbarkeit des SS-Trennschalters können das oder die Getriebe und die Schwenkhebel von Wartungspersonal leichter erreicht werden.

Eine weitere Aufgabe der vorliegenden Erfindung besteht darin, eine Schaltanlage mit einem DSS-System der eingangs genannten Art dahingehend auszugestalten und weiterzubilden, dass der Bedarf an Grundfläche der Schaltanlage verringert wird.

Zur Lösung dieser Aufgabe schlägt die Erfindung ausgehend von der Schaltanlage der eingangs genannten Art vor, dass jeweils zwei der SS-Trennschalter zu einer SS-Trennschalter-Kombinationen nach einem der Ansprüche 1 bis 10 zusammengefaßt sind.

Mit derartig zu SS-Trennschalter-Kombinationen zusammengefaßten SS-Trennschaltern kann die Grundfläche der erfindungsgemäßen Schaltanlage erheblich verringert werden.

Gemäß einer vorteilhaften Weiterbildung der Erfindung wird vorgeschlagen, dass die Sammelschienen jeweils für jede Phase eine eigene Leitung aufweisen und dass die Sammelschienen durch eine Tragkonstruktion oberhalb mindestens einer der Schaltfeldanordnungen angeordnet sind, wobei die Leitungen jeweils einer der Sammelschienen auf einem immaginären Kreisbogen, der in einer quer zur Erstreckungsrichtung der Leitungen verlaufenden imaginären Ebene liegt, zueinander beabstandet angeordnet sind. Mit derartig angeordneten Leitungen der Sammelschienen kann die von der erfindungsgemäßen Schaltanlage benötigte Grundfläche weiter verringert werden.

Auch diese Schaltanlage mit den Sammelschienen, deren Leitungen auf einem Kreisbogen angeordnet sind, weist vorteilhafterweise zu SS-Trennschalter-Kombinationen gemäß den Ansprüchen 1 bis 10 zusammengefaßte SS-Trennschalter auf. Die Anordnung der Leitungen der Sammelschienen einer Schaltanlage hat die angegebenen Vorteile aber auch ohne diese Merkmale des Kennzeichens des Patentanspruchs 1. Der Schutz des Patents soll sich deshalb auch auf Schaltanlagen der zuletzt genannten Art beziehen, bei denen die im Kennzeichen des Patentanspruchs 1 genannten Merkmale fehlen.

In Weiterbildung der Erfindung wird vorgeschlagen, dass die Leitungen an den ersten, distalen Enden von Stützisolatoren befestigt sind, deren zweite Enden in dem Mittelpunkt des Kreisbogens zusammenlaufen und an der Tragkonstruktion befestigt sind.

Im Folgenden werden zwei bevorzugte Ausführungsformen der vorliegenden Erfindung anhand der Zeichnungen näher erläutert. Es zeigen:
- Fig. 1: zwei Sammelschienen mit einer erfindungsgemäßen Sammelschienen (SS)-Trennschalter-Anordnung gemäß einer ersten Ausführungsform;
- Fig. 2: die erfindungsgemäße SS-Trennschalter-Anordnung aus Fig. 1;
- Fig. 3: eine erfindungsgemäße SS-Trennschalter-Anordnung gemäß einer zweiten Ausführungsform; und
- Fig. 4: eine aus dem Stand der Technik bekannte Schaltanlage.

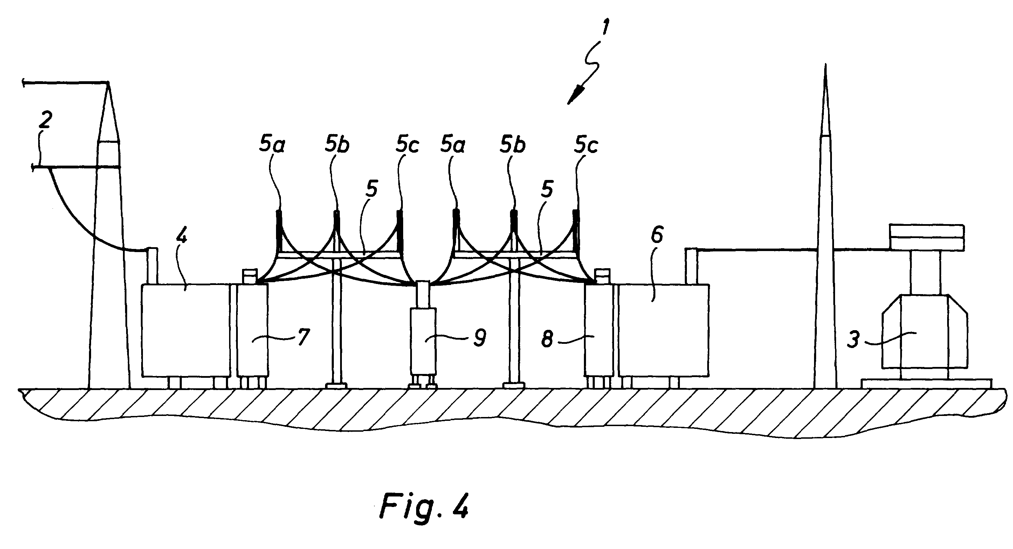

In Fig. 4 ist eine aus dem Stand der Technik bekannte luftisolierte Schaltanlage in ihrer Gesamtheit mit dem Bezugszeichen 1 gekennzeichnet. An die Schaltanlage 1 wird mittels Hochspannungsleitungen 2 von Kraftwerken (nicht dargestellt) über weite Strecken hinweg eine dreiphasige Hochspannung herangeführt. In der Schaltanlage 1 wird die Hochspannung durch einen Transformator 3 in eine andere Spannungsebene transformiert, die dann an andere Schaltanlagen, an Ortschaften oder an Industriebetriebe (nicht dargestellt) in Richtung Verbraucher weitergeleitet wird. Die Schaltanlage 1 weist eine als Leitungsschaltfeld ausgebildete erste Schaltfeldanordnung 4, zwei Sammelschienen 5 und eine als Transformatorschaltfeld ausgebildete zweite Schaltfeldanordnung 6 auf. Die Hochspannung wird von den Hochspannungsleitungen 2 über die erste Schaltfeldanordnung 4 zu den Sammelschienen 5 geleitet. Dort wird die Hochspannung gesammelt bzw. verteilt und an die zweite Schaltfeldanordnung 6 weitergeleitet. Die zweite Schaltfeldanordnung 6 steht mit dem Transformator 3 in Verbindung. Innerhalb der Schaltanlage 1 wird jede Phase der anliegenden Hochspannung gesondert geführt und geschaltet. So weisen die Sammelechienen 5 für jede der drei Phasen eine gesonderte Leitung 5a, 5b oder 5c auf.

Die als Leitungsschaltfeld ausgebildete erste Schaltfeldanordnung 4 verbindet die Hochspannungsleitungen 2 mit den Sammelschienen 5. In dem Leitungsschaltfeld ist für jede der drei zu schaltenden Phasen ein gesonderter Leistungsschalter (nicht dargestellt) angeordnet. Durch die Leistungsschalter kann die Verbindung zwischen den Hochspannungsleitungen 2 und den Sammelschienen 5 unterbrochen werden. Üblicherweise sind innerhalb des Leitungsschaltfeldes neben den Leistungsschaltern noch weitere Komponenten angeordnet, die in Fig. 4 jedoch nicht näher dargestellt sind.

Zwischen den Leistungsschaltern der ersten Schaltfeldanordnung 4 und jeder der Leitungen 5a, 5b, 5c der Sammelschienen 5 ist ein Sammelschienen (SS)-Trennschalter 7 angeordnet. Die SS-Trennschalter 7 sind in Fig. 4 nur symbolisch dargestellt. Durch die SS-Trennschalter 7 kann zwischen den beiden Sammelschienen 5 umgeschaltet werden und die erste Schaltfeldanordnung 4 wahlweise an eine der beiden Sammelschienen 5 angeschlossen werden. Außerdem kann die erste Schaltfeldanordnung 4 durch die SS-Trennschalter 7 vollständig von den Sammelschienen 5 getrennt werden.

Die als Transformatorschaltfeld ausgebildete zweite Schaltfeldanordnung 6 verbindet die Sammelschienen 5 mit dem Transformator 3. In dem Transformatorschaltfeld ist, wie in dem Leitungsschaltfeld, ebenfalls für jede der drei zu schaltenden Phasen ein Leistungsschalter (nicht dargestellt) angeordnet. Durch die Leistungsschalter kann die Verbindung zwischen den Sammelschienen 5 und dem Transformator 3 unterbrochen werden. Üblicherweise sind den Leistungsschaltern innerhalb des Transformatorschaltfeldes noch weitere Komponenten zugeordnet, die in Fig. 4 jedoch nicht näher dargestellt sind.

Zwischen jeder der Leitungen 5a, 5b, 5c der Sammelschienen 5 und den Leistungsschaltern der zweiten Schaltfeldanordnung 6 ist ein weiterer Sammelschienen (SS)-Trennschalter 8 angeordnet. Die SS-Trennschalter 8 sind in Fig. 4 lediglich symbolisch dargestellt. Durch die SS-Trennschalter 8 kann zwischen den beiden Sammelschienen 5 umgeschaltet werden und die zweite Schaltfeldanordnung 6 wahlweise an eine der beiden Sammelschienen 5 angeschlossen werden. Außerdem kann die zweite Schaltfeldanordnung 6 durch die SS-Trennschalter 8 vollständig von den Sammelschienen 5 getrennt werden.

Die Leitungen 5a, 5b, 5c der Sammelschienen 5 aus Fig. 4 verlaufen in einem vorgeschriebenen Mindestabstand zueinander in einer horizontalen Ebene. Die Sammelechienen 5 sind als ein Doppel-Sammelschienen (DSS)-System ausgebildet. Bei den DSS-Systemen dient eine Sammelschiene 5 zum eigentlichen Sammeln und Verteilen der Hochspannung, während die zweite Sammelschiene 5 als redundante Sammelschiene 5 ausgebildet ist, auf die bei Bedarf umgeschaltet werden kann. So kann bspw. bei einem Ausfall einer der Sammelschienen 5 oder zur Wartung einer der Sammelschienen 5 auf die andere Sammelschiene 5 des DSS-Systems umgeschaltet werden.

Insbesondere die Sammelschienen 5 und die SS-Trennschalter 7, 8 der bekannten Schaltanlage 1 aus Fig. 4 sind in nachteilhafter Weise derart ausgebildet, dass die bekannten Schaltanlage 1 eine große Grundfläche benötigt.

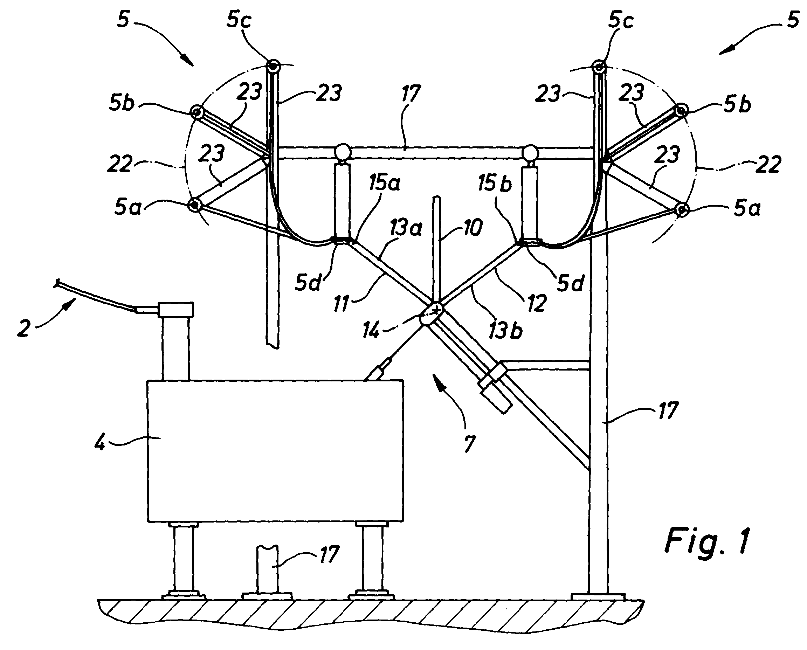

In Fig. 1 ist eine erfindungsgemäße SS-Trennschalter-Anordnung, bestehend aus zwei SS-Trennschaltern 7, dargestellt und wird nachfolgend näher erläutert. Da eine erfindungsgemäße SS-Trennschalter-Anordnung, bestehend aus zwei SS-Trennschaltern 8, genauso aufgebaut ist, wird sie hier nicht gesondert erläutert. Die erfindungsgemäße SS-Trennschalter-Anordnung benötigt nur eine besonders kleine Grundfläche.

Die SS-Trennschalter-Anordnung weist zwei SS-Trennschalter 7 auf, die in der Zeichenebene hintereinander angeordnet sind, so daß in Fig. 1 hauptsächlich der vordere SS-Trennschalter 7 zu erkennen ist. Die SS-Trennschalter 7 weisen jeweils einen Schwenkhebel 13a bzw. 13b auf. Die Schwenkhebel 13a, 13b sind jeweils an ihren ersten Enden um eine Verschwenkachse 14 in einer Verschwenkebene verschwenkbar gelagert. Die Verschwenkebenen der beiden Schwenkhebel 13a, 13b verlaufen parallel zu der Zeichenebene. An den zweiten Enden der Schwenkhebel 13a, 13b sind Schaltkontakte 15a, 15b ausgebildet. Die Schaltkontakte 15a, 15b stehen in einer Verbindungsstellung 11, 12 der Schwenkhebel 13a, 13b jeweils mit einem entsprechenden in der Verschwenkebene liegenden Aufnahmekontakt 5d einer der Sammelschienen 5 elektrisch leitend in Verbindung. In den Verbindungsstellungen 11, 12 ist über die Schwenkhebel 13a, 13b eine Verbindung zwischen dem Leistungsschalter und einer der Sammelschienen 5 hergestellt.

Die beiden SS-Trennschalter 7 sind zu einer SS-Trennschalter-Kombination zusammengefaßt. Dazu sind die Verschwenkebenen der beiden Schwenkhebel 13a, 13b besonders dicht beieinander angeordnet.

Die Schwenkhebel 13a, 13b des SS-Trennschalters 7 der SS-Trennschalter-Anordnung sind jeweils aus der Verbindungsstellung 11, 12 in eine Nullstellung 10 verschwenkbar. In der Nullstellung 10 erstrecken sich die Schwenkhebel 13a, 13b vertikal nach oben. In der ersten Verbindungsstellung 11 mit der ersten Sammelschiene 5 sind die Schwenkhebel 13a, 13b um 45^{°} im Uhrzeigersinn aus der Nullstellung 10 verschwenkt. In der zweiten Verbindungsstellung 12 mit der zweiten Sammelschiene 5 sind die Schwenkhebel 13a, 13b um 45^{°} entgegen dem Uhrzeigersinn aus der Nullstellung 10 verschwenkt.

Der erste Schwenkhebel 13a ist lediglich zwischen der ersten Verbindungsstellung 11 und der Nullstellung 10 verschwenkbar. Der zweite Schwenkhebel 13b ist lediglich zwischen der zweiten Verbindungsstellung 12 und der Nullstellung 10 verschwenkbar.

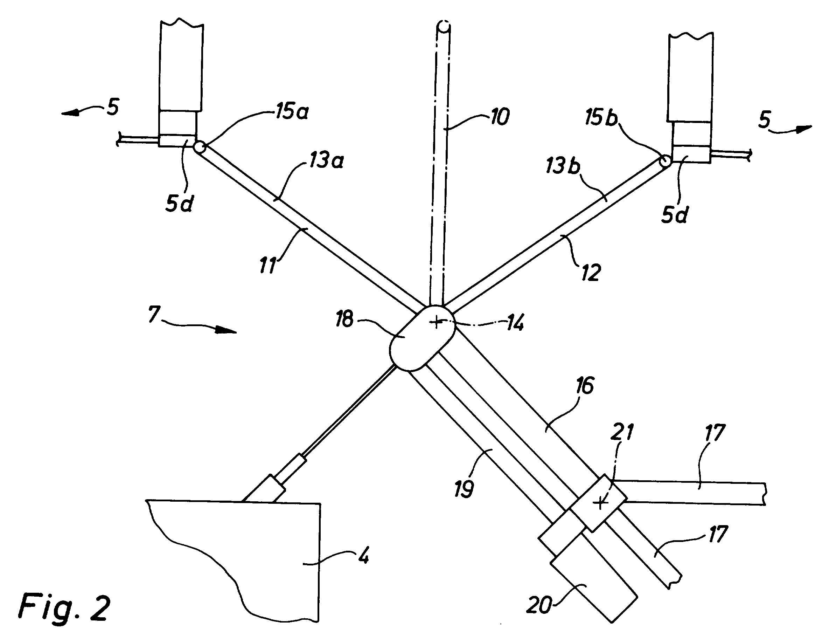

Die Verschwenkachse 14 verläuft durch das erste, distale Ende eines Stützisolators 16 (vgl. Fig. 2), der an seinem zweiten Ende über eine Tragkonstruktion 17 mit den Sammelschienen 5 elektrisch isoliert verbunden ist.

Die Schwenkhebel 13a, 13b sind jeweils in einem Getriebe 18 um die Verschwenkachse 14 verschwenkbar gelagert. Parallel zu dem Stützisolator 16 sind zwei um ihre Längssachsen drehbar gelagerte Drehisolatoren 19 angeordnet. Die Drehisolatoren 19 treiben über ihre ersten Enden jeweils ein Getriebe 18 an. Die zweite Enden der Drehisolatoren 19 sind jeweils mit einem Antrieb 20 verbunden. Die Getriebe 18 setzen die Drehbewegung der Drehisolatoren 19 in Schwenkbewegungen der Schwenkhebel 13a, 13b um.

Das zweite Ende des Stützisolators 16 ist tieferliegend angeordnet ist als das erste, distale Ende des Stützisolators 16. Die Antriebe 20 sind im Bereich des zweiten Endes des Stützisolators 16 angeordnet. Die SS-Trennschalter-Anordnung ist vertikal nach unten verschiebbar angeordnet. Dazu ist die SS-Trennschalter-Anordnung auf einer vertikal verlaufenden Schiene (nicht dargestellt) verschiebbar gelagert. Die vertikale Bewegung der SS-Trennschalter-Anordnung erfolgt mittels eines Spindelantriebs (nicht dargestellt). Durch diese Maßnahmen wird die Wartung und Reparatur der Antriebe 20, der Drehisolatoren 19 und der Getriebe 18 wesentlich erleichtert, da sie von Wartungspersonal gut erreichbar angeordnet sind bzw. ohne großen Aufwand in eine gut erreichbare Position verschoben werden können.

Die erfindungsgemäße luftisolierte Schaltanlage 1 aus Fig. 1 weist besonders ausgebildete Sammelschienen 5 auf. Die Sammelschienen 5 weisen für jede in der Schaltanlage 1 zu schaltende Phase eine eigene Leitung 5a; 5b; 5c auf. Die Sammelschienen sind durch die Tragkonstruktion 17 oberhalb der Schaltfeldanordnung 4 angeordnet. Die Leitungen 5a; 5b; 5c jeweils einer der Sammelschienen 5 sind auf einem immaginären Kreisbogen 22 zueinander beabstandet angeordnet. Der Kreisbogen 22 liegt in einer imaginären Ebene, die parallel zur Zeichenebene verläuft. Die Leitungen 5a, 5b, 5c sind an den ersten, distalen Enden von Stützisolatoren 23 befestigt, deren zweite Enden in dem Mittelpunkt des Kreisbogens 22 zusammenlaufen und an der Tragkonstruktion 17 befestigt sind. Durch derartig ausgebildete Sammelschienen 5 kann die von der Schaltanlage 1 benötigte Grundfläche weiter verringert werden.

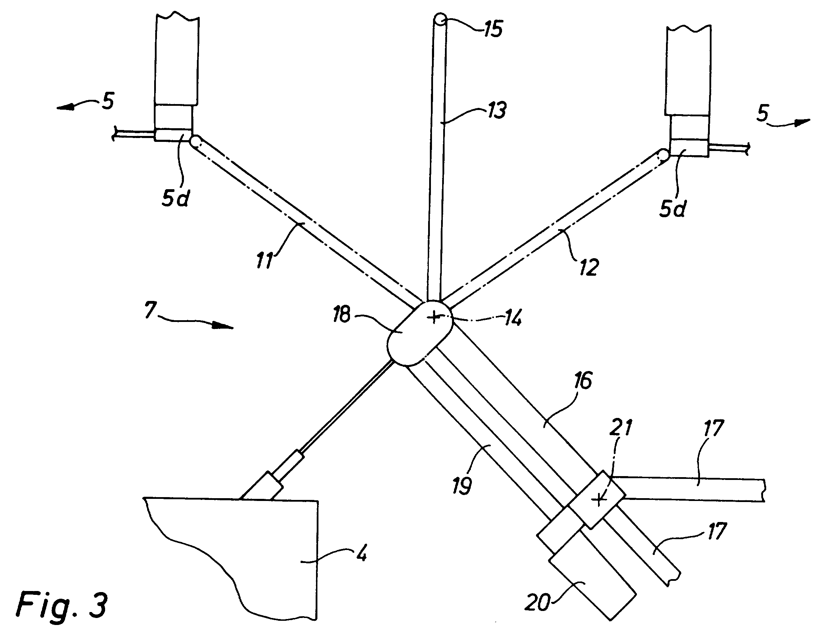

In Fig. 3 ist eine zweite Ausführungsform der erfindungsgemäßen SS-Trennschalter-Anordnung dargestellt. Wie die SS-Trennschalter-Anordnung gemäß der ersten Ausführungsform weist auch die SS-Trennschalter-Anordnung gemäß Fig. 3 zwei SS-Trennschalter 7 auf. Die Schwenkhebel 13a, 13b der SS-Trennschalter 7 sind jedoch in einem gemeinsamen Getriebe 18 um die Verschwenkachse 14 verschwenkbar gelagert. Parallel zu dem Stützisolator 16 ist lediglich ein um seine Längssachsen drehbar gelagerter Drehisolator 19 angeordnet. Der Drehisolator 19 treibt über sein erstes Ende das Getriebe 18 an. Das zweite Ende des Drehisolators 19 ist mit einem Antrieb 20 verbunden. Das Getriebe 18 setzt die Drehbewegung des Drehisolators 19 in entsprechende Schwenkbewegungen der beiden Schwenkhebel 13a, 13b um.

## Patentansprüche

1. Sammelschienen (SS)-Trennschalter-Anordnung bestehend aus zwei SS-Trennschaltern (7; 8), die in einer luftisolierten Schaltanlage (1) zum Umspannen einer Hochspannung, insbesondere einer Spannung zwischen 50 kV und 220 kV, mit einer ersten Schaltfeldanordnung (4), zwei Sammelschienen (5) und einer zweiten Schaltfeldanordnung (6), zwischen einem Leistungsschalter einer der Schaltfeldanordnungen (4; 6) und jeweils einer der Sammelschienen (5) angeordnet sind, **dadurch gekennzeichnet**, dass die SS-Trennschalter (7; 8) jeweils einen Schwenkhebel (13a; 13b) aufweisen, der an seinem ersten Ende um eine Verschwenkachse (14) in einer Verschwenkebene verschwenkbar gelagert ist und an dessen zweitem Ende ein Schaltkontakt (15a; 15b) ausgebildet ist, der in einer Verbindungsstellung (11; 12), in der über den Schwenkhebel (13a; 13b) eine Verbindung zwischen dem Leistungsschalter und einer der Sammelschienen (5) hergestellt ist, mit einem entsprechenden in der Verschwenkebene liegenden Aufnahmekontakt (5d) der Sammelschiene (5) elektrisch leitend in Verbindung steht, wobei die Verschwenkebenen der beiden SS-Trennschalter parallel zueinander verlaufen und die beiden SS-Trennschalter (7; 8) zu einer SS-Trennschalter-Kombination zusammengefaßt sind.

2. SS-Trennschalter-Anordnung nach Anspruch 1, dadurch gekennzeichnet, dass sich die Verschwenkebenen der SS-Trennschalter (7; 8) in etwa vertikal nach oben erstrecken.

3. SS-Trennschalter-Anordnung nach Anspruch 2, dadurch gekennzeichnet, dass die Schwenkhebel (13a, 13b) der SS-Trennschalter (7; 8) jeweils aus der Verbindungsstellung (11; 12) in eine Nullstellung (10) verschwenkbar sind, wobei sich die Schwenkhebel (13a, 13b) in der Nullstellung (10) in etwa vertikal nach oben erstrecken und in der ersten Verbindungsstellung (11) mit der ersten Sammelschiene (5) im Uhrzeigersinn bzw. in der zweiten Verbindungsstellung (12) mit der zweiten Sammelschiene (5) entgegen dem Uhrzeigersinn aus der Nullstellung (10) verschwenkt sind.

4. SS-Trennschalter-Anordnung nach Anspruch 3, dadurch gekennzeichnet, dass die Schwenkhebel (13a, 13b) in den Verbindungsstellungen (11, 12) jeweils um etwa 45^{°} aus der Nullstellung (10) verschwenkt sind.

5. SS-Trennschalter-Anordnung nach Anspruch 3 oder 4, dadurch gekennzeichnet, dass der erste Schwenkhebel (13a) zwischen der ersten Verbindungsstellung (11) und der Nullstellung (10) verschwenkbar ist und dass der zweite Schwenkhebel (13b) zwischen der zweiten Verbindungsstellung (12) und der Nullstellung (10) verschwenkbar ist.

6. SS-Trennschalter-Anordnung nach einem der Ansprüche 1 bis 5, dadurch gekennzeichnet, dass die Verschwenkachse (14) durch das erste, distale Ende eines Stützisolators (16) verläuft, der an seinem zweiten Ende mit den Sammelschienen (5) elektrisch isoliert verbunden ist.

7. SS-Trennschalter-Anordnung nach Anspruch 6, dadurch gekennzeichnet, dass die Schwenkhebel (13a, 13b) jeweils in einem Getriebe (18) um die Verschwenkachse (14) verschwenkbar gelagert sind, dass parallel zu dem Stützisolator (16) zwei um ihre Längssachsen drehbar gelagerte Drehisolatoren (19) angeordnet sind, die über ihre ersten Enden jeweils ein Getriebe (18) antreiben und deren zweite Enden jeweils mit einem Antrieb (20) verbunden sind, wobei die Getriebe (18) die Drehbewegung der Drehisolatoren (19) in Schwenkbewegungen der Schwenkhebel (13a, 13b) umsetzen.

8. SS-Trennschalter-Anordnung nach Anspruch 6, dadurch gekennzeichnet, dass die Schwenkhebel (13a, 13b) in einem Getriebe (18) um die Verschwenkachse (14) verschwenkbar gelagert sind, dass parallel zu dem Stützisolator (16) ein um seine Längssachsen drehbar gelagerter Drehisolator (19) angeordnet ist, der über sein erstes Ende das Getriebe (18) antreibt und dessen zweites Enden mit einem Antrieb (20) verbunden ist, wobei das Getriebe (18) die Drehbewegung des Drehisolators (19) in Schwenkbewegungen der Schwenkhebel (13a, 13b) umsetzt.

9. SS-Trennschalter-Anordnung nach Anspruch 7 oder 8, dadurch gekennzeichnet, dass das zweite Ende des Stützisolators (16) tieferliegend angeordnet ist als das erste, distale Ende des Stützisolators (16) und dass der oder die Antriebe (20) im Bereich des zweiten Endes des Stützisolators (16) angeordnet sind.

10. SS-Trennschalter-Anordnung nach einem der Ansprüche 1 bis 9, dadurch gekennzeichnet, dass die SS-Trennschalter-Anordnung vertikal nach unten verschiebbar angeordnet ist.

11. Luftisolierte Schaltanlage (1) zum Umspannen einer Hochspannung, insbesondere einer Spannung zwischen 50 kV und 220 kV, mit einer ersten Schaltfeldanordnung (4), zwei Sammelschienen (5), einer zweiten Schaltfeldanordnung (6) und mehreren Sammelschienen (SS)-Trennschaltern (7, 8), die jeweils zwischen einem Leistungsschalter einer der Schaltfeldanordnungen (4; 6) und einer der Sammelschienen (5) angeordnet sind, **dadurch gekennzeichnet**, dass jeweils zwei der SS-Trennschalter (7; 8) zu einer SS-Trennschalter-Kombinationen nach einem der Ansprüche 1 bis 10 zusammengefaßt sind.

12. Schaltanlage (1) zum Sammeln und Verteilen von mehrphasiger Hochspannung insbesondere nach Anspruch 11, dadurch gekennzeichnet, dass die Sammelschienen (5) jeweils für jede Phase eine eigene Leitung (5a; 5b; 5c) aufweisen und dass die Sammelschienen (5) durch eine Tragkonstruktion (17) oberhalb mindestens einer der Schaltfeldanordnungen (4, 6) angeordnet sind, wobei die Leitungen (5a; 5b; 5c) jeweils einer der Sammelschienen (5) auf einem immaginären Kreisbogen (22), der in einer quer zur Erstreckungsrichtung der Leitungen (5a, 5b, 5c) verlaufenden imaginären Ebene liegt, zueinander beabstandet angeordnet sind.

13. Schaltanlage (1) nach Anspruch 12, dadurch gekennzeichnet, dass die Leitungen (5a, 5b, 5c) an den ersten, distalen Enden von Stützisolatoren (23) befestigt sind, deren zweite Enden in dem Mittelpunkt des Kreisbogens (22) zusammenlaufen und an der Tragkonstruktion (17) befestigt sind.
